# FASCICULE DE BREVET EUROPEEN

(11) **EP 1 094 082 B1**
(45) Date de publication et mention de la délivrance du brevet: **07.06.2006**
(21) Numéro de dépôt: 00402897.3
(22) Date de dépôt: 19.10.2000
(51) Int. Cl.: C08B 31/00, C08B 30/12

(54) **Procédé de transformation de matières amylacées en phase sèche**
Verfahren zur Modifizierung von stärkehaltigen Materialien in trockener Phase
Process for modifying amylaceous materials in dry phase

(30) Priorité: 22.10.1999 FR 9913190
(43) Date de publication de la demande: 25.04.2001
(73) Titulaire: Roquette Frères, 62136 Lestrem (FR)
(72) Inventeur: Fuertes, Patrick, 59130 Lambersart (FR); Lambin, Anne, 59160 Lomme (FR); Dreux, Jean-Louis, 59940 Estaires (FR)
(74) Mandataire: Boulinguiez, Didier

(56) Documents cités:
- EP-A- 1 050 543
- FR-A- 2 445 840
- FR-A- 2 768 432
- US-A- 2 836 591
- US-A- 4 228 199
- US-A- 5 032 683
- US-A- 5 766 366
- PATENT ABSTRACTS OF JAPAN vol. 1996, no. 7, 31 juillet 1996 (1996-07-31) & JP 08 073502 A (DAIWA), 19 mars 1996 (1996-03-19) & DATABASE WPI Week 199621 Derwent Publications Ltd., London, GB; AN 205538

## Description

La présente invention a pour objet un procédé de transformation de matières amylacées comprenant des étapes de fluidification chimique et de stabilisation menées en phase sèche. Elle vise également les matières amylacées transformées obtenues selon ce procédé, certaines de ces matières constituant par ailleurs de nouveaux produits industriels. Elle concerne enfin les utilisations industrielles de ces matières amylacées transformées.

Par " fluidification chimique ", on entend ici toute opération consistant à soumettre une matière amylacée à l'action hydrolysante d'un agent chimique, par exemple un composé acide ou (per)oxydant, ledit agent pouvant être mis en oeuvre sous forme liquide, solide et/ou gazeuse.

Par " fluidification chimique en phase sèche " on entend ici une fluidification chimique telle que définie ci-avant, effectuée au sein d'un mélange réactionnel (matière amylacée y comprise) dont l'humidité est en pratique inférieure à 25 % environ, se situant préférentiellement entre 6 et 22 % environ.

Les techniques en phase sèche se distinguent des méthodes en milieu aqueux qui impliquent un milieu réactionnel beaucoup plus dilué, avec mise en oeuvre d'un lait d'amidon présentant une matière sèche ne dépassant généralement pas 35 à 40 %.

Ces méthodes de fluidification en milieu aqueux impliquent cependant la mise en oeuvre d'une étape supplémentaire de filtration qui présente l'inconvénient d'occasionner des pertes substantielles en matières solubles, principalement en granules d'amylacé abîmés, en molécules d'amylacé solubilisé et en sels générés lors de la neutralisation préalable de 1' amylacé fluidifié. Ceci se traduit à la fois par une diminution des rendements en matières amylacées fluidifiées et par une augmentation de la charge polluante des effluents.

Ces inconvénients ont contribué à la recherche et à la mise au point de techniques de fluidification chimique en phase sèche. Ainsi, les brevets US 3,479,220 et US 3,692,581 décrivent un procédé de fluidification chimique de matières amylacées (amidons, farines) par mise en contact, à température ambiante (≈25°C), de ces matières avec un acide minéral concentré mis sur un support inerte sec et finement divisé.

Le brevet EP 710.670 décrit un procédé de modification chimique en continu selon lequel une poudre d'amidon et un agent de modification, par exemple un agent hydrolysant comme l'acide chlorhydrique, sont introduits simultanément dans un réacteur particulier (" turboréacteur ") dont l'hélice permet, quasi instantanément, de créer par centrifugation une couche fluide, fine, dynamique et hautement turbulente d'un mélange intime entre les particules d'amidon et l'agent chimique.

La demande de brevet WO 97/13788 décrit, en termes généraux, un procédé de fluidification chimique d'amidons, effectué en phase sèche et en continu impliquant la mise en oeuvre obligatoire, entre autres, d'un réacteur de type piston (" plug flow reactor ") et de températures réactionnelles au plus égales à 77°C (170°F). Selon ce brevet, une très large gamme d'agents chimiques à action hydrolysante sont préconisés, les agents préférés étant l'acide chlorhydrique, notamment sous forme gazeuse, et l'acide sulfurique. Cependant, aucun exemple précis de préparation d'un amidon fluidifié n'est réellement détaillé dans ce document.

Pour sa part, la demande de brevet EP 902.037 au nom de la Demanderesse exemplifie la fluidification en phase sèche, dans des conditions caractéristiques de temps de séjour et de température, d'amidons natifs ou d'amidons cationiques.

En tout état de cause, qu'elles soient opérées en milieu aqueux ou en phase sèche, les techniques de fluidification chimique permettent de préparer des produits transformés présentant des propriétés physico-chimiques communément recherchées telles que notamment une viscosité intrinsèque et une viscosité à chaud diminuées, la viscosité à chaud pouvant être appréciée par la mesure classique de la fluidité dans l'eau (" Water Fluidity " ou WF), laquelle peut être mesurée conformément à la méthode décrite dans les brevets EP 373.313 et US 4,499,116 en utilisant un viscosimètre STORMER® comme préconisé dans " Modified Starches : Properties and Uses ", O.B. WURZBURG, M.S., CRC Press, Inc, 1986, page 20, étant entendu que la mesure des valeurs de WF supérieures à 90 est affinée par une extrapolation de la courbe WF en fonction du temps pour avoir 100 révolutions d'après une régression du type ln (WF) = a + b x ln (t) (ci-après " équation (1) ") et ce, en prenant les données du tableau situé colonne 9 du brevet US 4,499,116 pour une masse d'amidon sec de 13,20 g. La valeur des coefficients de l'équation (1) est de 5,384 pour a et de - 0,4080 pour b avec un coefficient de corrélation R² de 0,997. A titre d'exemple, en appliquant l'équation (1), lorsque le temps pour avoir 100 révolutions est de 7,0 secondes, la fluidité dans l'eau (WF) ainsi calculée est de 98,5.

Parmi les autres propriétés recherchées, on peut citer :
- une solubilité à chaud augmentée, et
- une force de gel (" gel strength ") et une filmogénéité (" film strength ") augmentées.

L'un des principaux avantages technico-économiques des matières amylacées fluidifiées chimiquement consiste en leur aptitude à être mises en oeuvre et traitées, notamment à être cuites, à des matières sèches très élevées ; ceci, du fait de leur viscosité largement abaissée en regard des produits natifs.

Cette aptitude se traduit par des gains en énergie (moindres volumes d'eau à éliminer) et des avantages technologiques largement mis à profit dans l'industrie. Cependant, quel que soit leur procédé de préparation, les matières amylacées fluidifiées chimiquement présentent généralement l'inconvénient de donner lieu à des colles peu stables et notamment à des colles présentant une augmentation très significative de viscosité lors d'un refroidissement et/ou lors d'un stockage prolongé. Cette instabilité se manifeste souvent par un phénomène irréversible de gélification ou de rétrogradation.

C'est pourquoi on associe généralement les techniques de fluidification chimique à des réactions de stabilisation, et notamment à des réactions d'estérification,d'éthérification ou d'oxydation, en vue de rendre les matières amylacées fluidifiées applicables industriellement. Il peut s'agir notamment de réactions d'acétylation, d'hydroxypropylation ou d'oxydation par l'eau de javel. Ces techniques bien qu'efficaces ont l'inconvénient de générer une forte pollution organique et/ou saline. D'autres moyens visent à associer les techniques de fluidification chimique à des réactions de réticulation.

Ainsi le brevet US 3,705,046 décrit la réticulation, en phase aqueuse, d'un amidon, natif ou cationique, par mise en oeuvre de paraformaldéhyde et ce, simultanément ou antérieurement à sa fluidification, également en phase aqueuse, par l'acide chlorhydrique. Compte-tenu de l'application visée (surfaçage de fibres textiles), l'amidon réticulé/fluidifié obtenu doit cependant être relativement peu dépolymérisé et conserver une viscosité relativement élevée, à savoir une viscosité Brabender, mesurée à une matière sèche (" MS ") plutôt faible (10 %), toujours supérieure à 200 unités Brabender (" UB ") et généralement comprise entre 230 et 930 UB environ. De telles viscosités correspondent à des valeurs de WF limitées, à savoir inférieures à 45 environ et ce, bien que les auteurs envisagent la mise en oeuvre de quantités relativement importantes d'acide chlorhydrique. Les enseignements de ce brevet montrent en effet que pour obtenir les produits souhaités, la normalité du milieu réactionnel filtré (" filtrate acidity ") doit être inférieure à 2 N et, en pratique, être comprise entre 0,05 et 0,30 N ce qui correspond globalement à des pH réactionnels au plus égaux à 1,3 environ.

En outre, il apparaît que la durée de la réaction doit être importante (généralement entre 10 et 15 heures, voire 24 heures selon l'exemple 1) pour obtenir les niveaux souhaités de réticulation et de dépolymérisation.

Les brevets US 3,778,431 ET 3,884,909 décrivent la réticulation, en phase aqueuse, d'un amidon de maïs natif ou cationique par mise en oeuvre d'un agent réticulant tel que le 1,3-dichloro-2-propanol, le 1,4-dichlorobutène-2 ou l'épichlorhydrine et ce, antérieurement à sa fluidification par l'acide chlorhydrique, également en milieu aqueux.

Cependant, de tels procédés présentent, voire accentuent, les inconvénients précités inhérents aux techniques en phase aqueuse (diminution des rendements, augmentation des charges polluantes).

Pour leur part, les brevets EP 710.670, WO 97/13788 et EP 902.037 précités, beaucoup plus récents, ne s'intéressent pas spécifiquement à l'association d'une étape de fluidification et d'une étape de réticulation si ce n'est que le document WO 97/13788 mentionne, de manière aucunement détaillée, la possibilité que l'amidon soumis à la fluidification (" starch source ") ait été préalablement modifié par des agents tels que l'épichlorhydrine ou l'oxychlorure de phosphore (cf. page 3, lignes 9-25 dudit document).

Le document FR 2 445 840 décrit un procédé de préparation d'un amidon de tapioca modifié, comprenant une étape de fluidification en phase aqueuse, suivie d'une étape de réticulation en phase aqueuse.

Le document EP-A-1050543, publié après la date de dépôt, décrit un procédé de transformation de matières amylacées comprenant une étape de fluidication chimique et une étape de stabilisation par la mise en oeuvre d'un acide organique polycarboxylique.

Il résulte de ce qui précède qu'il n'existe pas, à la connaissance de la Demanderesse, de moyen de préparation d'une matière amylacée fluidifiée et stabilisée, moyen qui simultanément :
- permette la préparation industrielle de produits fortement fluidifiés, présentant une très bonne stabilité au refroidissement et/ou lors d'un stockage prolongé,
- n'implique pas, pour cela, la mise en oeuvre obligatoire de taux élevés d'agents de réticulation ou de fluidification ni d'importantes durées réactionnelles,
- soit applicable à des matières amylacées de natures très diverses ou destinées à subir subséquemment des modifications, chimiques ou physiques, très diverses,
- soit économique et notamment permette d'atteindre de bons rendements en matières amylacées fluidifiées, et
- soit peu ou non polluant et notamment n'occasionne pas de pertes substantielles en matières solubles au niveau des effluents.

Et le mérite de la Société Demanderesse est d'avoir trouvé, après de nombreuses études, qu'un tel moyen pouvait consister en l'association, en phase sèche, d'une étape de fluidification et d'une étape particulière de stabilisation, cette dernière mettant en oeuvre spécifiquement un agent sélectionné parmi les composés aldéhydiques.

De façon plus précise la présente invention a pour objet un procédé de transformation d'une matière amylacée caractérisé en ce qu'il comprend :
- une étape de fluidification chimique au cours de laquelle la matière amylacée est soumise, en phase sèche, à l'action d'un agent choisi parmi les acides minéraux, les acides organiques et leurs mélanges, de telle sorte que ladite matière amylacée présente une fluidité dans l'eau (WF) au moins égale à 10, de préférence au moins égale à 45, et
- une étape de stabilisation, simultanée à ladite étape de fluidification, au cours de laquelle la matière amylacée est soumise, également en phase sèche, à l'action d'un agent choisi parmi les composés aldéhydiques et leurs mélanges.

Par " acides minéraux " on entend, entre autres, l'ensemble des acides minéraux, sous forme liquide et/ou gazeuse, décrits dans l'art antérieur, en particulier dans la demande WO 97/13788 précitée.

Par " acides organiques ", on entend les acides organiques mono-, di- et tricarboxyliques aptes à fluidifier fortement, pour le moins substantiellement, des matières amylacées en phase sèche. Il peut s'agir, entre autres, d'acides citrique, adipique ou fumarique.

Par " fluidifier substantiellement ", il faut comprendre que ledit acide permet de conférer à la matière amylacée une valeur de fluidité dans l'eau (WF) au moins égale à 10 environ. Par " fluidifier fortement ", il faut comprendre que ladite valeur de WF est au moins égale à 45 environ et notamment se situer entre 50 et 90, voire atteindre la valeur de 99.

Dans le cadre de la présente invention, on utilise avantageusement un acide minéral fort tel que l'acide chlorhydrique, sous forme liquide et/ou gazeuse, l'acide sulfurique ou un mélange de ces acides.

Par " composé aldéhydique ", on entend tout particulièrement les composés de toutes natures et origines, contenant une ou plusieurs fonction(s) aldéhydique et qui, en milieu acide, sont aptes à se condenser, se polymériser et/ou à réagir avec les fonctions hydroxyle (OH) des matières amylacées.

A titre d'exemple et comme décrit dans le brevet US 2,836,591, le formaldéhyde peut être utilisé, en milieu acide, pour repolymériser des produits préalablement fortement dépolymérisés non-granulaires et solubles à froid tels que des hydrolysats d'amidon présentant un DE (Dextrose Equivalent) de 5 à 40, en particulier de 16 à 20. Les conditions d'obtention de ces hydrolysats ne sont pas précisées. En outre, l'acide minéral mis en oeuvre lors de cette transformation agit uniquement comme catalyseur de polymérisation et aucunement d'hydrolyse, les auteurs prenant par ailleurs le maximum de précautions (séchage des hydrolysats par atomisation, transformation dans un dextrinificateur, ...)pour que cette transformation se fasse en présence de très peu d'eau, i.e dans un milieu dont la teneur en eau est inférieure à 6 %.

En suite de quoi, ce document s'intéresse aucunement aux possibilités de combiner, notamment en phase sèche, une étape de fluidification à l'étape particulière mettant en oeuvre le formaldéhyde et en particulier ne permet de tirer aucun enseignement positif sur les possibilités d'effectuer simultanément ces deux étapes.

Dans le cadre de la présente invention, le composé aldéhydique mis en oeuvre, simultanément ou non à l'étape de fluidification chimique, peut être de nature très variée.

Il peut s'agir d'aldéhydes non polymérisés tels que le formaldéhyde, l'acétaldéhyde, l'isobutyraldéhyde, le crotonaldéhyde, le furfural, l'acroléine ou le glyoxal, ou d'aldéhydes polymérisés, sous forme cyclique ou non, tels que le paraformaldéhyde.

Cependant, de manière très avantageuse, le composé aldéhydique est constitué d'au moins un condensat entre au moins un aldéhyde et au moins un composé azoté. Un certain nombre de ces condensats sont utilisés pour la préparation de produits appelés génériquement " résines " ou constituent, en tant que tels, de telles résines.

Les techniques de préparation, les caractéristiques physico-chimiques et les applications industrielles de tels condensats sont, à titre d'exemples, décrites dans l'ouvrage intitulé " ULLMANN'S ENCYCLOPEDIA OF INDUSTRIAL CHEMISTRY " - Fifth Edition - VCH, en particulier dans les passages suivants dudit ouvrage :
- Volume A2 (1985) : " Amino Resins ", pages 115 à 141,
- Volume A23 (1993) : " Resins, Synthetic ", pages 89 à 110, et
- Volume A27 (1996) : " Reaction of Urea and its derivatives with aldehydes ", pages 358 à 365.

Préférentiellement, les composés aldéhydiques utilisés, en phase sèche, comme agents de stabilisation conformément à la présente invention sont constitués d'au moins un condensat entre au moins un aldéhyde et au moins un composé azoté choisi parmi l'urée et ses dérivés, la mélamine et ses dérivés et les mélanges quelconques d'au moins deux quelconques de ces produits. Il peut s'agir notamment de résines de type urée-formol ou mélamine-formol telles que celles commercialisées, entre autres, sous les appellations RESAMINE®, LYSPAC®, URECOLL®, KAURIT® ou MADURIT®.

De manière très avantageuse, il s'agit de résines urée-formol.

Par " étape de stabilisation " on entend notamment tout moyen ou procédé, physique et/ou chimique, apte à améliorer la stabilité au refroidissement et/ou au stockage de la matière amylacée, en particulier apte à réticuler, peu ou prou, ladite matière.

Selon une première variante, le procédé objet de l'invention peut être caractérisé en ce que la matière amylacée est soumise simultanément aux étapes de fluidification et de stabilisation.

Au sens de la présente invention le terme " simultanément " ne doit pas être considéré comme restrictif mais comme excluant uniquement le cas de figure selon lequel l'étape de fluidification d'une part et l'étape de stabilisation d'autre part ne connaîtraient aucune contemporanéité, ne serait-ce que de quelques minutes. Ce terme " simultanément " inclus les cas de figure selon lesquels :
- les deux étapes débutent en même temps mais l'une se termine avant l'autre, ou
- les deux étapes ne débutent pas en même temps mais se terminent en même temps, ou
- l'une étape se déroule entièrement après que l'autre ait débuté mais avant que l'autre ne se termine, ou
- l'une étape débute après que l'autre ait débuté mais avant que l'autre ne se termine.

Selon une autre variante avantageuse, ledit procédé est caractérisé en ce que les étapes de fluidification et de stabilisation sont menées avec des quantités d'acide(s) telles que le pH (mesuré sur un échantillon remis en suspension dans de l'eau déminéralisée, à une concentration de 35 %), soit supérieur à 1,3 environ, de préférence compris entre 1,6 et 3,0.

Ce pH peut avantageusement être compris entre 1,6 et 2,8.

De tels pH constituent une autre caractéristique du procédé selon l'invention se distinguant fondamentalement de ceux découlant des enseignements du brevet US 3,705,046 discuté ci-avant.

Ils peuvent notamment être obtenus par mise en oeuvre d'une quantité totale d'acide(s) fort(s) au plus égale à 0,5 %, et en particulier être obtenus avantageusement par mise en oeuvre :
- soit de 0,05 à 0,25 % d'acide chlorhydrique,
- soit de 0,1 à 0,5 % d'acide sulfurique, ces pourcentages étant exprimés en poids sec d'acide(s) par rapport au poids sec de matière amylacée.

Selon une variante préférentielle, on met en oeuvre :
- soit de 0,05 à 0,2 % d'acide chlorhydrique,
- soit de 0,1 à 0,4 % d'acide sulfurique.

Et il est remarquable de souligner que le procédé selon l'invention, lequel est mené de manière caractéristique en phase sèche, permet, si on le souhaite, d'obtenir des matières amylacées plus fluidifiées que celles résultant du brevet US 3,705,046 précité et ce, par utilisation de quantités d'agents de fluidification chimique, significativement inférieures à celles préconisées dans ledit brevet.

Selon une autre variante, le procédé objet de l'invention est caractérisé en ce que l'on met en oeuvre une quantité totale d'agent(s) de stabilisation, à savoir de composé(s) aldéhydique(s), inférieure à 1 %, de préférence comprise entre 0,01 et 0,95 %, ces pourcentages étant exprimés en poids sec d'agent(s) de stabilisation par rapport au poids sec de matière amylacée. Cette quantité peut avantageusement être comprise entre 0,02 et 0,20 %.

Les valeurs ci-dessus se distinguent également fondamentalement des quantités de paraformaldéhyde effectivement exemplifiées dans le brevet US 3,705,046 précité, à savoir 1 %.

En suite de quoi, le procédé objet de la présente invention, mené de manière caractéristique en phase sèche, permet de préparer des matières amylacées fluidifiées et stabilisées par mise en oeuvre de quantités d'agent de fluidification mais également d'agent de stabilisation particulièrement faibles en regard de l'art antérieur et présente donc un intérêt économique et écologique indéniable.

Selon une autre variante, ledit procédé est caractérisé en ce que les étapes de fluidification et de stabilisation, simultanées, sont menées à une température comprise entre environ 60°C et environ 180°C, et pendant une durée totale comprise entre environ 2 minutes et environ 8 heures.

Ces durées peuvent notamment être de l'ordre de 2 minutes à 6 heures en fonction, entre autres, de la température réactionnelle, celle-ci étant de préférence supérieure à 100°C lorsque l'acide mis en oeuvre est de nature organique.

Par " matière amylacée " au sens de la présente invention, on entend l'ensemble des amidons natifs, d'origine naturelle ou hybride, y compris ceux issus de mutations ou manipulations génétiques, ainsi que l'ensemble des amidons modifiés issus de la modification chimique et/ou physique, en une ou plusieurs étapes, desdits amidons natifs. Les amidons, natifs ou modifiés, peuvent notamment être issus de pomme de terre, de pomme de terre à haute teneur en amylopectine (pomme de terre waxy), de maïs, de blé, de maïs à haute teneur en amylose, de riz, de pois ou de manioc, des coupes ou fractions qui peuvent être faites ou obtenues telles que l'amylose, l'amylopectine, les coupes granulométriques connues de l'homme de l'art sous les vocables d'amidon de blé " A " et amidon de blé " B ", et les mélanges quelconques d'au moins deux quelconques des produits susmentionnés. Les matières amylacées utilisables selon l'invention peuvent également consister en des farines ou autres mélanges contenant amidon(s) et protéine(s) végétale(s), le composant " amidon(s) " étant majoritaire, ainsi que l'ensemble des produits issus de la modification chimique et/ou physique, en une ou plusieurs étapes, desdites farines et desdits mélanges.

Selon une variante, l'amidon natif ou modifié constituant

Selon une variante, l'amidon natif ou modifié constituant la matière amylacée ou contenu dans celle-ci se présente majoritairement sous forme granulaire.

Selon une autre variante, le procédé de transformation de matières amylacées selon l'invention est caractérisé en ce que la matière amylacée soumise aux étapes, éventuellement simultanées, de fluidification chimique et de stabilisation est choisie parmi les amidons natifs et les farines ainsi que les produits résultant de l'éthérification, de l'estérification, de la sulfonation, de l'oxydation et/ou de la plastification, et en particulier de la cationisation, de l'hydroxyalkylation ou de l'acétylation, desdits amidons et desdites farines.

Il a notamment été constaté que ladite matière amylacée pouvait avantageusement être cationique.

Le procédé selon l'invention présente par ailleurs l'intérêt de pouvoir être mené sur des dispositifs non spécifiques et notamment des réacteurs agités ou de type piston présentant des géométries, dimensions et modes de fonctionnement très divers, y compris ceux décrits dans les brevets EP 710 670 et WO 97/13788 susmentionnés.

En suite de quoi, on dispose désormais d'un nouveau moyen particulièrement simple, peu coûteux et performant d'obtention de matières amylacées substantiellement ou fortement fluidifiées et stabilisées présentant de larges gammes de propriétés physico-chimiques et applicatives.

En effet, ces matières amylacées présentent généralement un " indice S " relativement faible, ledit indice étant inversement proportionnel à la stabilité au refroidissement desdites matières. De manière plus précise l'indice S d'une matière amylacée est égal au rapport entre la viscosité BROOKFIELD à 20°C et 100 tours par minute (ci-après " V 20°C ") et la viscosité à 80°C et 100 tours par minute (" V 80°C ") de la matière amylacée se présentant sous forme d'une colle à 15 % de matière sèche (MS), obtenue à partir d'une suspension présentant une MS initiale de 25 %, cuite pendant 3 minutes au jet-cooker à 145°C et diluée à 15 % de MS.

Le procédé de transformation selon l'invention permet, entre autres, d'obtenir des produits qui présentent simultanément une fluidité dans l'eau (WF) au moins égale à 45 environ et notamment comprise entre environ 50 et environ 90, et un indice S tel que défini ci-avant, au plus égal à 30 environ, de préférence au plus égal à 10.

A la connaissance de la Demanderesse des produits obtenus en phase sèche et ainsi fluidifiés est stabilisés constituent de nouveaux produits industriels qui peuvent avantageusement être utilisés dans les opérations de couchage ou de surfaçage du papier, d'encollage ou d'apprêtage textile et ce, notamment en tant qu'agents filmogènes, liants, fixateurs de fibres et/ou rétenteurs d'eau. Ces nouvelles matières amylacées fluidifiées / stabilisées peuvent également être mises en oeuvre comme agents texturants, en particulier viscosifiants ou épaississants, dans la préparation de gommes ou produits gélifiés alimentaires, pharmaceutiques ou cosmétiques ou encore comme agents adhésifs ou texturants dans la fabrication de plaques de plâtres ou de carton ondulé.

Selon une variante avantageuse, ces produits se présentent, à l'instar des matières amylacées dont ils sont issus, sous une forme majoritairement granulaire.

L'ensemble des matières amylacées décrites ci-avant peuvent, en outre, être avantageusement cationiques (y compris amphotères) et présenter, par exemple, un taux d'azote fixé compris entre environ 0,1 et 3 % (sec / sec).

La présente invention va être décrite de façon encore plus détaillée à l'aide des exemples qui suivent et qui ne sont aucunement limitatifs.

### EXEMPLE 1 (=exemple comparatif)

Dans cet exemple, on transforme une matière amylacée native, en l'occurrence un amidon de maïs natif à 13 % d'humidité, en phase lait et ce, conformément à l'exemple 1 du brevet US 3,705,046 précité. On met ainsi en oeuvre, à 54°C environ (129°F), un lait d'amidon de maïs (lait à 35,5 % de MS) dont le pH est ajusté à 8,3 avec une solution de carbonate de sodium puis 1 %, exprimé par rapport au poids sec d'amidon, de paraformaldéhyde. Après 90 minutes de contact, le pH du lait est ajusté à une valeur de 2,2 par addition d'acide chlorhydrique. Après agitation, le milieu réactionnel est maintenu pendant 17 heures à 54°C en vue d'assurer la réticulation de l'amylacé puis acidifié avec de l'acide chlorhydrique (0,67 % en poids sec/poids sec d'amidon) de sorte que l'acidité du filtrat dudit milieu est de l'ordre de 0,115 mol/l et son pH inférieur à 1,0. La fluidification proprement dite est alors effectuée pendant 24 heures à 54°C environ. En suite de quoi, le lait résultant est neutralisé, essoré, lavé puis séché conformément à l'exemple 1 du brevet US 3,705,046.

Malgré le taux élevé d'acide chlorhydrique mis en oeuvre et la durée très importante de la réaction, on constate que le produit obtenu présente une fluidité dans l'eau (WF) limitée, à savoir d'une valeur de 42 environ. Par ailleurs, la " viscosité au pic " et la " viscosité à 60 minutes " de ce produit, mesurées conformément au brevet US 3,705,046 donnent des valeurs (respectivement 147 et 133 Unités Brabender) du même ordre mais légèrement moins élevées que celles décrites dans l'exemple 1 dudit brevet (respectivement 252 et 238 UB). Les enseignements de ce brevet ne permettent donc pas d'obtenir des amidons réticulés fortement fluidifiés, à savoir présentant une WF au moins égale à 45.

### EXEMPLE 2

Dans cet exemple, on transforme une matière amylacée en phase sèche conformément à l'invention. Dans un mélangeur à haute vitesse, on introduit 40 kg d'un amidon de maïs natif puis 0,13 % (sec/sec) d'acide chlorhydrique ainsi que 0,1 % (sec/sec) de paraformaldéhyde sous forme d'une solution dans du carbonate de sodium. Le milieu réactionnel homogénéïsé présente une teneur en eau de 15 % environ et un pH de 2,6 environ, mesuré de la façon telle que précisée ci-avant. Il est introduit dans un mélangeur à socs chauffé à une température de 80°C environ. Après seulement 4h35 min. environ de réaction, le produit transformé obtenu est extrait du réacteur et neutralisé par pulvérisation d'une solution de soude à 4 %.

La mesure de la fluidité dans l'eau (WF) de ce produit donne une valeur de 73 environ ce qui traduit un haut niveau de fluidification.

Par ailleurs, la stabilité de ce produit a été vérifiée par étude, à différentes températures, de la viscosité BROOKFIELD (vitesse de rotation : 100 tours par minute) d'une colle à 15 % de matière sèche (MS) obtenue à partir d'une suspension à 25 % de MS initiale cuite 3 minutes au jet-cooker (145°C) et diluée.

Les résultats obtenus montrent une très grande stabilité de ce produit dont la viscosité augmente de manière régulière et limitée entre 80°C (V80°C = 27 mPa.s) et 20°C (V20°C = 120 mPa.s).

En suite de quoi, celui-ci présente un indice S, tel que défini ci-avant (s = V20°C/V80°C), de valeur particulièrement basse à savoir de 4,4 environ.

Cet exemple montre que le procédé objet de l'invention permet, de manière particulièrement efficace et notamment sans mise en oeuvre obligatoire de taux élevés d'agents de réticulation ou de fluidification ni d'importantes durées réactionnelles, de préparer industriellement des matières amylacées qui à la fois sont substantiellement ou fortement fluidifiées et présentent une très bonne stabilité au refroidissement. En outre, ces matières peuvent conserver, comme dans le cas présent, leur forme majoritairement granulaire.

### EXEMPLE 3

Dans cet exemple, on transforme un amidon de maïs natif selon le procédé décrit dans l'EXEMPLE 2 ci-dessus si ce n'est que, pour chaque ESSAI A à I, on modifie l'un, au moins, des paramètres opératoires suivants : nature de la matière amylacée, nature du réacteur, nature et/ou taux d'introduction de l'agent stabilisant, nature et/ou taux d'introduction de l'agent fluidifiant, durée réactionnelle.
- ESSAI A : agent de stabilisation = résine urée-formol de type " RESAMINE® HW 864 " (taux d'introduction 0,1 % en poids sec/poids sec d'amidon - cf EXEMPLE 2) ; nature/taux d'introduction en agent fluidifiant : cf EXEMPLE 2 ; tp réactionnelle : 88°C ; durée réactionnelle : 1h40 min.
- ESSAI B : IDEM ESSAI A sauf 1) nature/taux d'agent fluidifiant = 0,30 % d'acide sulfurique (sec/sec) 2) température réactionnelle = 90°C environ, 3) durée réactionnelle = 1h40 min. et 4) teneur en eau du milieu : 18,7 % environ.
- ESSAI C : IDEM ESSAI B sauf 1) température réactionnelle : 92°C et 2) durée réactionnelle = 50 min.
- ESSAI D : IDEM ESSAI A sauf 1) nature de l'agent stabilisant = résine urée-formol de type " URECOLL® S " 2) température réactionnelle : 80°C et 3) durée réactionnelle = 2h06 min.
- ESSAI E : IDEM ESSAI D sauf 1) nature de l'agent stabilisant = résine urée-formol de type "KAURIT® 285 " et 2) durée réactionnelle = 1h50 min.
- ESSAI F : IDEM ESSAI E sauf 1) nature de l'agent stabilisant = résine mélamine-formol de type " MADURIT® MW 114 " et 2) durée réactionnelle = 1h22 min.
- ESSAI G : IDEM ESSAI A sauf 1) nature de la matière amylacée = amidon de maïs cationique (teneur en azote fixé : 0,15 %), 2)température réactionnelle : 80°C et 3) durée réactionnelle : 2h.
- ESSAI H : IDEM ESSAI A sauf 1) humidité initiale du mélange réactionnel : 22 %, 2) réacteur de type turbo-réacteur tel que décrit dans le brevet EP 710.670 précité, 3) température du fluide thermique : 110°C et 4) durée réactionnelle : 3 min. environ.
- ESSAI I : IDEM ESSAI H sauf que le mélange réactionnel ne contient aucun composé aldéhydique.

On mesure la fluidité dans l'eau (WF) ainsi que l'indice S de chacun des produits obtenus.

Les résultats sont repris ci-dessous :

| ESSAI | WF | INDICE S |
|---|---|---|
| A | 99 * | 2,1 |
| B | 99 * | 2,3 |
| C | 78 | 2,9 |
| D | 69 | 4,1 |
| E | 70 | 5,7 |
| F | 69 | 23,1 |
| G | 59 | 3,4 |
| H | 68 | 4,7 |
| I | 70 | 60 |

| | | |
|---|---|---|
| * Valeur calculée à l'aide de l'équation (1) susmentionnée. | | |

Ces résultats confirment globalement l'intérêt du procédé en phase sèche conforme à l'invention, lequel permet, de manière simple et économique, d'obtenir des matières amylacées fortement fluidifiées et hautement stables dont certaines constituent, comme indiqué précédemment, de nouveaux produits industriels. Il convient de noter que de tels produits, en particulier ceux obtenus avec urée-formol, sont au moins aussi stables que des matières amylacées fluidifiées à un même degré par de l'eau de javel et qui ont l'inconvénient de générer une forte pollution chlorée.

Et il est remarquable de noter qu'un tel résultat peut être obtenu en mettant en oeuvre :
- des composés aldéhydiques tels que des résines urée-formol, en faibles proportions, en particulier significativement inférieures à 1 % (sec/sec), et/ou
- des acides tels que des acides minéraux forts, en faibles proportions, y compris significativement inférieures à 0,5 % (sec/sec), et/ou
- des durées réactionnelles relativement courtes ou très courtes, en particulier au plus égales à 6 heures, par exemple comprises entre 3 minutes et 5 heures, et/ou
- des matières amylacées natives et modifiées, en particulier cationiques, et/ou
- des réacteurs, par exemple de type agité, de géométrie, dimensions et modes de fonctionnement très divers.

### EXEMPLE 4 (example comparatif)

Dans cet exemple, on transforme, en phase lait (lait à 37,5 % de MS), un amidon de maïs en utilisant :
- 0,1 % (sec/sec) de résine urée-formol " RESAMINE® H 864 ", et
- de l'acide chlorhydrique en quantité telle que le pH du lait se situe à 1,3 environ.

Après 14 heures de réaction à 51°C, l'amidon est neutralisé, essoré et séché à son humidité originelle (13 %). Le produit obtenu présente une valeur de WF de 72. Cependant, il se révèle très peu stable puisque sa viscosité augmente très fortement entre 80°C (52 mPa.s) et 20°C (4700 mPa.s) d'où un indice de S de 90 environ.

Il s'avère donc impossible de préparer, en phase lait, des amidons qui soient simultanément fluidifiés et stabilisés.

## Revendications

1. Procédé de transformation d'une matière amylacée **caractérisé en ce qu'**il comprend :
- une étape de fluidification chimique au cours de laquelle la matière amylacée est soumise, en phase sèche, à l'action d'un agent choisi parmi les acides minéraux, les acides organiques et leurs mélanges, de telle sorte que ladite matière amylacée présente une fluidité dans l'eau (WF) au moins égale à 45, et
- une étape de stabilisation, simultanée à ladite étape de fluidification, au cours de laquelle la matière amylacée est soumise, également en phase sèche, à l'action d'un agent choisi parmi les composés aldéhydiques et leurs mélanges.

2. Procédé selon la revendication 1 **caractérisé en ce que** le composé aldéhydique est constitué d'au moins un condensat entre un aldéhyde et un composé azoté, de préférence choisi parmi l'urée et ses dérivés, la mélamine et ses dérivés et leurs mélanges.

3. Procédé selon l'une quelconque des revendications 1 et 2 **caractérisé en ce que** les étapes de fluidification et de stabilisation sont menées avec des quantités d'acide(s) telles que le pH (mesuré sur un échantillon remis en suspension dans de l'eau déminéralisée, à une concentration de 35 %), soit supérieur à 1,3 environ, de préférence compris entre 1,6 et 3,0.

4. Procédé selon l'une quelconque des revendications 1 à 3 **caractérisé en ce que** l'on met en oeuvre, en vue de la fluidification de la matière amylacée, une quantité totale d'acide(s) au plus égale à 0,5 %, de préférence comprise :
- entre 0,05 et 0,25 %, en particulier entre 0,05 et 0,2 %, quand l'acide consiste en acide chlorhydrique, ou
- entre 0,1 et 0,5 %, en particulier entre 0,1 et 0,4 %, quand l'acide consiste en acide sulfurique, ces pourcentages étant exprimés en poids sec d'acide(s) par rapport au poids sec de matière amylacée.

5. Procédé selon l'une quelconque des revendications 1 à 4 **caractérisé en ce que** l'on met en oeuvre, en vue de la stabilisation de la matière amylacée, une quantité totale de composé(s) aldéhydique(s) inférieure à 1 %, de préférence comprise entre 0,01 et 0,95 %, ces pourcentages étant exprimés en poids sec de composé(s) aldéhydique(s) par rapport au poids sec de matière amylacée.

6. Procédé selon l'une quelconque des revendications 1 à 5 **caractérisé en ce que** les étapes de fluidification et de stabilisation sont menées :
- à une température comprise entre 60°C et 180°C, et
- pendant une durée totale comprise entre 2 minutes et 8 heures, en particulier comprise entre 2 minutes et 6 heures.

7. Matière amylacée obtenue selon l'une quelconque des revendications 1 à 6 **caractérisée en ce qu'**elle présente simultanément :
- une fluidité dans l'eau (WF) comprise entre 50 et 90, et
- un indice S compris entre 1 et 5, ledit indice étant égal au rapport entre la viscosité BROOKFIELD à 20°C et 100 tours par minute et la viscosité à 80°C et 100 tours par minute de la matière amylacée se présentant sous forme d'une colle à 15 % de matière sèche (MS), obtenue à partir d'une suspension présentant une MS initiale de 25 %, cuite pendant 3 minutes au jet-cooker à 145°C et diluée à 15 % de MS.

8. Matière amylacée selon la revendication 7 ou obtenue selon l'une quelconque des revendications 1 à 6, **caractérisée en ce qu'**elle est cationique.

9. Utilisation d'une matière amylacée selon l'une quelconque des revendications 7 ou 8 ou obtenue selon l'une quelconque des revendications 1 à 6, comme agent filmogène, liant, fixateur de fibres et/ou rétenteur d'eau dans les opérations de couchage ou de surfaçage du papier, d'encollage ou d'apprêtage textile, comme agent texturant, en particulier viscosifiant ou épaississant, dans la préparation de gommes ou produits gélifiés alimentaires, pharmaceutiques ou cosmétiques ou comme agent adhésif ou texturant dans la fabrication de plaques de plâtre ou de carton ondulé.

## Claims

1. A process for the conversion of a starchy substance **characterized in that** it comprises:
- a stage of chemical liquification in the course of which the starchy substance is subjected, in the dry phase, to the action of an agent selected from mineral acids, organic acids and mixtures thereof, resulting in a starchy substance having a water fluidity (WF) of at least 45, and
- a stabilization stage, simultaneous with the above liquification stage, in the course of which the starchy substance is subjected, also in the dry phase, to the action of an agent selected from aldehyde compounds and mixtures thereof.

2. A process according to claim 1, **characterized in that** the aldehyde compound is made up of at least one condensate of an aldehyde and a nitrogen compound, preferably selected from urea and its derivatives, melamine and its derivatives and mixtures thereof.

3. A process according to any of claims 1 or 2, **characterized in that** the liquification and stabilization stages are carried out with quantities of acid(s) such that the pH (measured on a sample suspended in demineralized water, at a concentration of 35%) is higher that about 1.3, preferably in the range of 1.6 to 3.0.

4. A process according to any of claims 1 to 3, **characterized in that**, in view of the liquification of the starchy substance, the total amount of acid(s) used is at most 0.5%, preferably :
- in the range of 0.05 to 0.25 %, most preferably in the range of 0.05 to 0.2 %, when the acid is hydrochloric acid, or
- in the range of 0.1 to 0.5 %, most preferably in the range of 0.1 to 0.4 %, when the acid is sulfuric acid,
these percentages being expressed as dry weight of the acid(s) to the dry weight of the starchy substance.

5. A process according to any of claims 1 to 4, **characterized in that**, in view of the stabilization of the starchy substance, the total quantity of aldehyde compound used is less than 1 %, preferably in the range of between 0.01 and 0.95 %, these percentages being expressed as dry weight of the aldehyde compound(s) to the dry weight of the starchy substance.

6. A process according to any of claims 1 to 5, **characterized in that** the liquification and stabilization stages are carried out:
- at a temperature in the range of between 60°C and 180°C, and
- for a total time in the range of 2 minutes to 8 hours, preferably in the range of 2 minutes and 6 hours.

7. A starchy substance obtained according to any of claims 1 to 6, having both:
- a water fluidity (WF) in the range of 50 to 90, and
- an S index in the range of 1 to 5,
said index being the ratio of the Brookfield viscosity measured at 20 °C and at 100 rpm, to the viscosity measured at 80 °C and at 100 rpm, of the starchy composition in the form of a glue having a dry matter content (DM) of 15 %, obtained from a slurry having an initial DM of 25 %, cooked for 3 minutes in a jet-cooker at 145 °C and then diluted to a DM of 15 %

8. A starchy substance according to claim 7 or obtained according any of claims 1 to 6, **characterized in that** it is cationic.

9. The use of a starchy substance according to any of claims 7 or 8, or obtained according to any of claims 1 to 6, as a film-forming agent, a binding agent, a fiber fixer and/or a water retainer in the processes of coating or surfacing paper, sizing or finishing textiles, as a texturing agent, in particular as a viscosifier or thickener in the preparation of gums or gels used in food, pharmaceutical or cosmetic products, or as an adhesive or texturing agent in the manufacture of plaster sheets or corrugated cardboard.

## Patentansprüche

1. Verfahren zur Modifizierung von stärkehaltigem Material, **dadurch gekennzeichnet, dass** dieses umfasst:
- einen chemischen Fluidifikationsschritt, im Laufe dessen das stärkehaltige Material in trockener Phase der Behandlung mit einem Mittel unterzogen wird, ausgewählt aus Mineralsäuren, organischen Säuren und Gemischen davon, so dass das stärkehaltige Material eine Fluidität in Wasser (WF) von mindestens 45 aufweist, und
- einen gleichzeitig mit dem Fluidifikationsschritt ablaufenden Stabilisierungsschritt, im Laufe dessen das stärkehaltige Material, ebenfalls in trockener Phase, der Behandlung mit einem Mittel ausgesetzt wird, ausgewählt aus Aldehydverbindungen und Gemischen davon.

2. Verfahren gemäß Anspruch 1, **dadurch gekennzeichnet, dass** die Aldehydverbindung aus mindestens einem Kondensat zwischen einem Aldehyd und einer Stickstoffverbindung, vorzugsweise ausgewählt aus Harnstoff und Derivaten davon, Melamin und Derivaten davon und deren Gemischen, besteht.

3. Verfahren gemäß einem der Ansprüche 1 und 2, **dadurch gekennzeichnet, dass** die Schritte der Fluidifikation und der Stabilisierung mit solchen Mengen an Säure(n) durchgeführt werden, dass der pH-Wert (gemessen bei einer Probe, die in destilliertem Wasser in einer Konzentration von 35% suspendiert wird) höher als etwa 1,3 ist und vorzugsweise zwischen 1,6 und 3,0 liegt.

4. Verfahren gemäß einem der Ansprüche 1 bis 3, **dadurch gekennzeichnet dass**, um das stärkehaltige Material zu fluidisieren, eine Gesamtmenge an Säure(n) von höchstens 0,5% eingesetzt wird, vorzugsweise von:
- zwischen 0,05 und 0,25 %, insbesondere zwischen 0,05 und 0,2%, wenn die Säure Chlorwasserstoffsäure ist, oder
- zwischen 0,1 und 0,5%, insbesondere zwischen 0,1 und 0,4%, wenn die Säure Schwefelsäure ist, wobei diese Prozentzahlen in Trockengewicht der Säure(n) bezogen auf das Trockengewicht des stärkehaltigen Materials ausgedrückt sind.

5. Verfahren gemäß einem der Ansprüche 1 bis 4, **dadurch gekennzeichnet, dass** um das stärkehaltige Material zu stabilisieren, eine Gesamtmenge an Aldehydverbindung(en) von weniger als 1%, vorzugsweise zwischen 0,01 und 0,95%, eingesetzt wird, wobei diese Prozentzahlen in Trockengewicht der Aldehydverbindung(en) bezogen auf das Trockengewicht des stärkehaltigen Materials ausgedrückt sind.

6. Verfahren gemäß einem der Ansprüche 1 bis 5, **dadurch gekennzeichnet, dass** die Schritte der Fluidifikation und der Stabilisierung durchgeführt werden:
- bei einer Temperatur zwischen 60°C und 180°C, und
- während einer Gesamtdauer zwischen 2 Minuten bis 8 Stunden, insbesondere zwischen 2 Minuten und 6 Stunden.

7. Stärkehaltiges Material, erhalten nach einem der Ansprüche 1 bis 6, **dadurch gekennzeichnet, dass** dieses gleichzeitig aufweist:
- eine Fluidität in Wasser (WF) zwischen 50 und 90 und
- einen Index S zwischen 1 und 5, wobei der Index dem Verhältnis zwischen der Brookfield-Viskosität bei 20°C und 100 Umdrehungen pro Minute und der Viskosität bei 80°C und 100 Umdrehungen pro Minute des stärkehaltigen Materials entspricht, das in Form eines Kleisters mit 15% Trockenmasse (MS) vorliegt, erhalten aus einer Suspension mit einer Anfangs-MS von 25%, die für 3 Minuten in einem Jet-Cooker bei 145°C gekocht und auf 15% MS verdünnt wird.

8. Stärkehaltiges Material gemäß Anspruch 7 oder erhalten gemäß einem der Ansprüche 1 bis 6, **dadurch gekennzeichnet**, das es kationisch ist.

9. Verwendung eines stärkehaltigen Materials gemäß einem der Ansprüche 7 oder 8 oder erhalten gemäß einem der Ansprüche 1 bis 6, als Filmbildner, Bindemittel, Faserfixierer und/oder Rückhaltemittel für Wasser beim Streichen oder der Oberflächenbehandlung von Papier, beim Schlichten oder Appretieren von Textilien, als Texturmittel, insbesondere als Viskosifizierer oder Verdickungsmittel, zur Herstellung von Gummen oder gelierten Lebensmitteln, pharmazeutischen oder kosmetischen Produkten oder als Haftmittel oder Texturmittel bei der Herstellung von Gipsplatten oder Wellpappe.
